# EUROPÄISCHE PATENTSCHRIFT

(11) **EP 0 826 991 B1**
(45) Veröffentlichungstag und Bekanntmachung des Hinweises auf die Patenterteilung: **15.12.1999**
(21) Anmeldenummer: 97114370.6
(22) Anmeldetag: 20.08.1997
(51) Int. Cl.: G02B 6/38

(54) **Gasdichte Lichtleiterkupplung**
Gastight lightguide connector
Connecteur pour guide de lumière comprenant un passage étanche

(30) Priorität: 26.08.1996 DE 29614671 U
(43) Veröffentlichungstag der Anmeldung: 04.03.1998
(73) Patentinhaber: ABB PATENT GmbH, 68309 Mannheim (DE)
(72) Erfinder: Schwarz, Michael, 63579 Freigericht (DE); Ebbinghaus, Dirk, 44536 Lünen (DE)
(74) Vertreter: Rupprecht, Klaus, Dipl.-Ing.

(56) Entgegenhaltungen:
- FR-A- 2 567 239
- GB-A- 1 175 873
- US-A- 2 733 939
- US-A- 2 761 702
- US-A- 4 080 044
- PATENT ABSTRACTS OF JAPAN vol. 008, no. 153 (P-287), 17.Juli 1984 & JP 59 050414 A (KOKUSAI DENSHIN DENWA KK;OTHERS: 01), 23.März 1984,

## Beschreibung

Die Erfindung betrifft eine Lichtleiterkupplung gemäß dem Oberbegriff des Anspruches 1.

Lichtleiterkupplungen als solche sind an sich bekannt. In eine Durchgangsöffnung werden beidseitig Lichtwellenleiter-Steckverbinder (Stecker) eingeführt und befestigt. In der Durchgangsöffnung befindet sich eine Hülse, die die Steckerverbinderferrulen präzise zueinander ausrichtet. Diese Lichtleiterkupplungen sind aber nicht gasdicht.

Aus der FR-A 2 567 239 ist eine Lichtleiterdurchführung bekannt geworden, bei der ein Lichtleiter durch zwei ineinander verschraubte Flanschelemente hindurchgeführt wird. Die beiden Flanschelemente drücken beim Verschrauben beidseitig auf Dichtungselemente und drücken diese Dichtungselemente radial nach innen gegen die Außenfläche des Lichtleiters.

Aus der GB-A 1 175 873 ist eine Rohrdurchführung für kontaminierende Produkte bekannt geworden, bei der ein Flanschelement vorgesehen ist, mit dem die Durchführung an einer Wand befestigt werden kann. Innerhalb des Flanschelementes befindet sich eine Dichtung, die zwei gegeneinanderstoßende Rohrstücke umgibt. Mittels zweier in das Flanschelement eingeschraubter Bolzen mit jeweils einer Durchgangsöffnung für die Rohrstücke wird die Dichtung innerhalb des Flanschelementes festgehalten.

Bei der Anordnung nach der US-A 2 761 702 ist ein zylindrisches Rohrstück vorgesehen, in das von beiden Seiten Flanschelemente eingeschraubt werden können; innerhalb der Flanschelemente verlaufen zwei miteinander zu verbindende Rohrstücke, zwischen denen sich eine Ringdichtung befindet. Die Flanschelemente drücken gegen Absätze an den Rohrenden und werden dadurch gegen die Ringdichtung gedrückt.

Aufgabe der Erfindung ist es, eine Lichtleiterkupplung der eingangs genannten Art zu schaffen, bei der beidseitig ein Lichtsteckerelement angeschlossen werden kann und mit der eine Gasdichtigkeit erreicht wird.

Diese Aufgabe wird erfindungsgemäß gelöst durch die kennzeichnenden Merkmale des Anspruches 1.

Damit wird eine Lichtleiterkupplung geschaffen, bei der aufgrund der Anordnung die Glasfaser in der Ferrule zentriert und fixiert wird, wobei keine Spannung auf die Glasfaser ausgeübt wird, weswegen Signale nicht verfälscht werden. Darüber hinaus ist ein Verkleben nicht erforderlich, welches bei Temperaturschwankungen zu Undichtigkeiten führen würde. Wenn die Lichtwellenleiterstecker abgezogen werden, verbleibt nur noch ein kleines Kupplungsteil an der Gehäusewandung.

In zweckmäßiger Weise kann die Kupplung z. B. in einem Blindstopfen eingebracht sein, der selbst wiederum in eine Öffnung der Metallkapselung gasdicht eingesetzt ist. Natürlich kann die Kupplung auch in einer Wandung mit entsprechender Wandstärke eingebaut sein.

Selbstverständlich können in diesen Blindstopfen mehrere Lichtleiterkupplungen oder -durchführungen eingebaut sein.

Weitere vorteilhafte Ausgestaltungen und Verbesserungen der Erfindung ergeben sich aus den weiteren Unteransprüchen.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine Schnittansicht gemäß der Schnittlinie I-I der Fig. 2 einer Lichtleiterdurchführung, und
- Fig. 2: die Aufsicht auf die Durchführungsanordnung gemäß Pfeilrichtung II der Fig. 1.

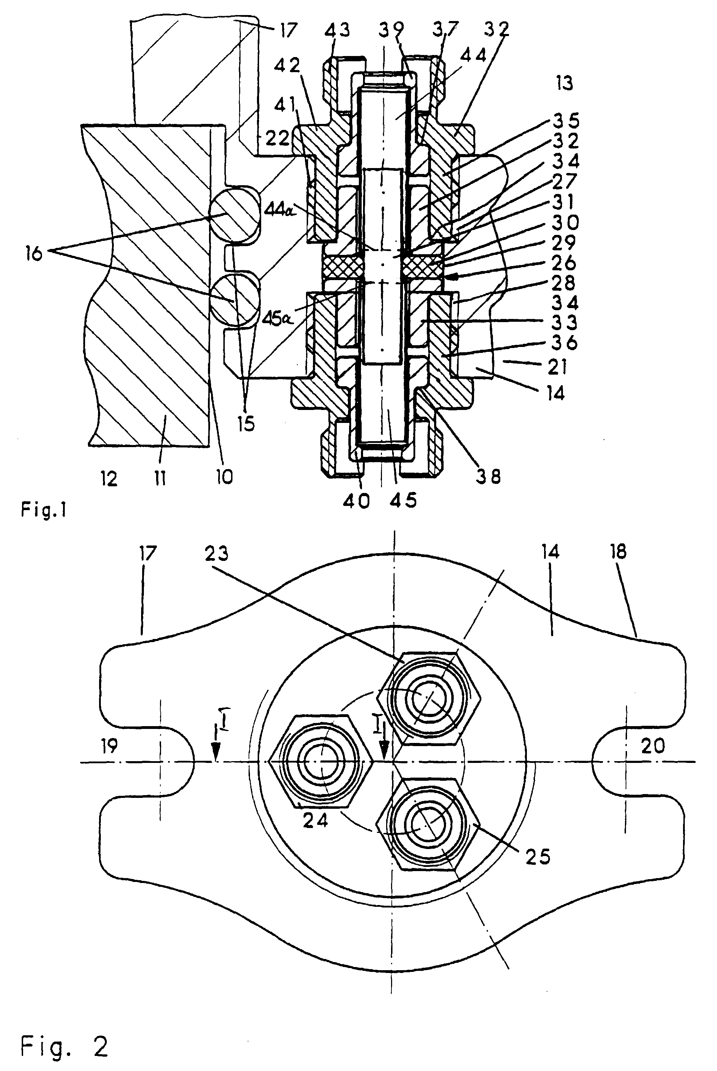

In die Öffnung 10 einer Metallkapselung 11 einer Hochspannungsschaltanlage, die im Raum 12 z. B. mit SF6 oder mit einem anderen Gas gefüllt ist, das unter einem höheren Druck als der Atmosphärendruck steht, und bei der der Raum 13 (in der Zeichnung oberhalb) die Umgebung darstellt, ist ein Stopfen 14 eingesetzt, der auf seiner zylindrischen Außenfläche zwei Nuten 15 aufweist, in die je eine Rundschnurdichtung 16 eingesetzt sind. Wie aus Fig. 2 hervorgeht, besitzt der Stopfen 14 diametral sich gegenüberliegende Flanschvorsprünge 17 und 18, die Aussparungen 19 und 20 aufweisen, mit denen der Stopfen 14 an der Metallkapselung 11 von außen mittels einer Schraubverbindung befestigt werden kann.

Im zylindrischen Abschnitt des Stopfens 14, der die Bezugsziffer 21 besitzt, ist flanschseitig eine kreisförmige Vertiefung 22 vorgesehen, in der drei Durchführungen 23, 24 und 25 eingebracht sind, von denen die Durchführung 24 in der Fig. 1 im Schnitt gemäß Schnittlinie I-I dargestellt ist.

Die Durchführung 24 besitzt, ebenso wie die Durchführungen 23 und 25, eine Durchführungsöffnung 26 mit zwei Gewindeabschnitten 27 und 28, deren Gewindedurchmesser größer ist als der Durchmesser eines Abschnittes 29 zwischen den Gewindeabschnitten 27 und 28.

In den Abschnitt 29, der auch als Dichtabschnitt bezeichnet ist, ist eine Rundschnurdichtung 30 eingesetzt, die eine Durchführungsferrule 31 umgibt.

Gegen die Dichtung 30 sind beidseitig Druckstücke 32 und 33 angedrückt, die gleich aufgebaut sind und eine Stufung 34 aufweisen, gegen die die Stirnseite eines Flanschelementes 35 bzw. 36 zum Anliegen kommt.

Dadurch, daß die innen befindlichen Stirnseiten der Flanschelemente 35 und 36 gegen das Druckstück 32, 33 an deren Stufung 34 anliegen, kann beim Einschrauben der Flanschelemente 35, 36 die Dichtung 30 zwischen den beiden Druckstücken 32, 33 verpreßt werden, so daß sie abdichtend sowohl gegen den Dichtbereich 29 als auch gegen die Ferrule 31 angepreßt wird. Zwischen dem Druckstück 32 bzw. 33 und einer Stufung 37 und 38 an der Innenwandung des Flanschelementes 35, 36 ist jeweils eine Hülse 39, 40 fixiert, die zur Führung und zum Schutz der auf der Durchführungsferrule 31 befindlichen Hülsen 44 und 45 dienen. Die Hülsen 44 und 45, die vorzugsweise aus Kunststoff oder Keramik bestehen, verlaufen je vom freien Ende der Hülsen 39, 40 bis annähernd zur Dichtung 30 (hier angedeutet durch strichlierte Linien 44a, 45a). Die nicht näher darstellten Steckverbinderferrulen werden durch die Hülsen 39 und 40 und die darin befindlichen Hülsen 44 und 45 präzise zur Durchführungsferrule 31 zentriert.

Die Flanschelemente 35 und 36 sind gleich aufgebaut und besitzen einen in das Innengewinde 27, 28 einschraubbaren Außengewindeabschnitt 41, an den sich ein Sechskantflansch 42 anschließt, an den sich wiederum ein Topf 43 anschließt, mit dem der Stecker geführt wird.

Die Erfindung ist anhand der Lichtleiterkupplung 24 beschrieben worden. Die Lichtleiterkupplungen 23 und 25 sind identisch aufgebaut. Mit der in den Fig. 1 und 2 dargestellten Lichtleiterkupplung können Signale einer dreiphasig gekapselten gasisolierten Schaltanlage für jede einzelne Phase durch die Kapselung nach außen gasdicht nach außen herausgeführt werden.

Demgemäß wird eine Anzahl von Lichtleiterdurchführungen oder -kupplungen 23, 24, 25 abgedichtet mit einer Dichtung 30 in einen Stopfen oder in eine Wandung mit geeigneter Stärke eingesetzt, der bzw. die dann schlußendlich in eine Metallkapselung eingebaut wird.

## Patentansprüche

1. Lichtleiterkupplung durch die Gehäusewand eines Gehäuses, mit einer Durchführungsferrule (31), die beidseitig durch mit Flanschelementen (32,33) geführte Steckerferrulen und Stecker kontaktierbar ist, wobei die Flanschelemente (32,33) in Innengewindeabschnitte, die von den Seitenflächen der Gehäusewandung ausgehen, einschraubbar sind, dadurch gekennzeichnet, daß zwischen den Innengewindeabschnitten (27, 28) ein Dichtbereich (29) mit einem kleineren Durchmesser als der Durchmesser der Innengewindeabschnitte (27, 28) vorgesehen ist, daß in dem Dichtbereich (29) eine Rundschnurdichtung (30) vorgesehen ist, die mittels der in die Innengewindeabschnitte (27, 28) eingeschraubten Flanschelemente (35, 36) gegen den Dichtbereich (29) und gegen die Außenfläche der Durchführungsferrule (31) angepreßt ist, daß jedes Flanschelement (35, 36) an seiner Innenfläche einen Rücksprung (37, 38) aufweist, so daß der Innendurchmesser jedes Flanschelementes in Richtung nach innen hin erweitert ist, und daß jedes Flanschelement mit dem Rücksprung (37, 38) zur Führung und Halterung einer an die Innenfläche des Flanschelementes angepaßten Hülse (39, 40) dient, in der Führungshülsen (44, 45) zur Führung und Ausrichtung von Steckverbinderferrulen zur Durchführungsferrule (31) vorgesehen sind.

2. Lichtleiterkupplung nach Anspruch 1, dadurch gekennzeichnet, daß zwischen jedem Flanschelement (35, 36) und der Dichtung (30) je ein Druckring (32, 33) vorgesehen ist, der vom Flanschelement (35, 36) gegen die Dichtung (30) gedrückt ist.

3. Lichtleiterkupplung nach Anspruch 1 oder 2, dadurch gekennzeichnet, daß jedes Flanschelement einen Außengewindeabschnitt aufweist, mit dem es in das Innengewinde der Gehäusewand einschraubbar ist, daß an dem Gewindeabschnitt ein mit einer profilierten Umfangskante, vorzugsweise mit einem Sechskant, versehener Flanschrand (32) vorgesehen ist, und daß das freie äußere Ende des Flanschelementes einen nach außen offenen und zur Aufnahme eines Steckers dienenden Topf (43) aufweist.

4. Hochspannungsschaltanlage zum Schalten einer Anzahl von Phasen mit einer Metallkapselung in Form eines Gehäuses, in dem sich gegebenenfalls ein Gas, z.B SF₆, gegebenenfalls mit höherem Druck als die Umgebungsluft befindet, mit einer Anzahl von Lichtleiterkupplungen nach einem der Ansprüche 1 bis 3, welche der Anzahl der Phasen entspricht, und mit einem in einer Öffnung der Gehäusewand abgedichtet befestigten Stopfen, in dem die Lichtleiterkupplungen eingebracht sind.

5. Lichtleiterkupplung nach Anspruch 4, dadurch gekennzeichnet, daß der Stopfen auf seiner der Umgebungsluft zugewandten Außenfläche eine Vertiefung aufweist, in der die Durchführungen angeordnet sind.

## Claims

1. Optical conductor coupling through the housing wall of a housing, having a bushing ferrule (31) with which contact can be made at both ends by means of plug ferrules, guided by flange elements (32, 33), it being possible for the flange elements (32, 33) to be screwed into internal thread sections which proceed from the lateral surfaces of the housing wall, characterized in that a sealing region (29) with a smaller diameter than the diameter of the internal thread sections (27, 28) is provided between the internal thread sections (27, 28), in that provided in the sealing region (29) is a cord packing (30) which is pressed by means of the flange elements (35, 36) screwed into the internal thread sections (27, 28) against the sealing region (29) and against the outer surface of the bushing ferrule (31), in that each flange element (35, 36) has an offset (37, 38) on its inner surface so that the inside diameter of each flange element is widened in the inward direction, and in that each flange element with the offset (37, 38) serves to guide and hold a sleeve (39, 40) which is adapted to the inner surface of the flange element, in which guide sleeves (44, 45) are provided for guiding and aligning plug-in connector ferrules relative to the bushing ferrule (31).

2. Optical conductor coupling according to Claim 1, characterized in that provided in each case between each flange element (35, 36) and the seal (30) is a thrust ring (32, 33) which is pressed against the seal (30) by the flange element (35, 36).

3. Optical conductor coupling according to Claim 1 or 2, characterized in that each flange element has an external thread section with the aid of which it can be screwed into the internal thread of the housing wall, in that there is provided on the thread section a flange edge (32) provided with a profiled peripheral edge, preferably with a hexagon, and in that the free outer end of the flange element has a pot (43) which is open outwards and serves to hold a plug.

4. High-voltage switching station for switching a number of phases, having a metal enclosure in the form of a housing in which, if appropriate, a gas, for example SF₆, is located, possibly at a higher pressure than the ambient air, having a number of optical conductor couplings according to one of Claims 1 to 3 which corresponds to the number of the phases, and having a stopper which is fastened in a sealed fashion in an opening in the housing wall and in which the optical conductor couplings are inserted.

5. Optical conductor coupling according to Claim 4, characterized in that on its outer surface facing the ambient air the stopper has a depression in which the bushings are arranged.

## Revendications

1. Connecteur pour guide de lumière traversant la paroi d'un boîtier, comportant un manchon de traversée (31) qui peut être connecté des deux côtés à l'aide de manchons enfichables et de fiches guidés dans des éléments à brides (32, 33), les éléments à brides pouvant être vissés dans des tronçons filetés intérieurement qui s'étendent à partir des surfaces latérales de la paroi de boîtier, caractérisé par le fait qu'une partie d'étanchéité (29) avec un diamètre inférieur au diamètre des tronçons filetés intérieurement (27, 28) est prévue entre lesdits tronçons filetés intérieurement, par le fait qu'il est prévu dans la partie d'étanchéité (29) un joint torique (30) qui est pressé contre la partie d'étanchéité (29) et contre le surface extérieure du manchon de traversée (31) par les éléments à brides (35, 36) vissés dans les tronçons filetés intérieurement (27, 28), par le fait que chaque élément à bride (35, 36), sur sa surface intérieure, comporte un épaulement (37, 3 8) tel que le diamètre intérieur de chaque élément à bride s'élargit en direction de l'intérieur et par le fait que chaque élément à bride pourvu de l'épaulement (37, 38) sert au guidage et au maintien d'un manchon (39, 40) adapté à la surface intérieure de l'élément à bride, dans lequel des manchons de guidage (44, 45) sont prévus pour le guidage et l'alignement de manchons de connexion enfichables par rapport au manchon de traversée (31).

2. Connecteur pour guide de lumière selon la revendication 1, caractérisé par le fait qu'il est prévu entre chaque élément à bride (35, 36) et le joint (30) une bague de pression (32, 33) qui est pressée contre le joint (30) par ledit élément à bride (35, 36).

3. Connecteur pour guide de lumière selon la revendication 1 ou 2, caractérisé par le fait que chaque élément à bride présente un tronçon fileté extérieurement par lequel il peut être vissé dans le filetage intérieur de la paroi de boîtier, par le fait qu'il est prévu sur le tronçon fileté un collet (32) pourvu d'un bord périphérique profilé, de préférence avec une forme hexagonale, et par le fait que l'extrémité libre extérieure de l'élément à bride comporte un puits (43) ouvert vers l'extérieur destiné à recevoir une fiche.

4. Installation de commutation à haute tension pour commuter un certain nombre de phases, comprenant un blindage métallique, sous la forme d'un boîtier contenant le cas échéant un gaz, par exemple du SF₆, le cas échéant sous une pression supérieure à la pression de l'air ambiant, un certain nombre de connecteurs de conducteurs de lumière selon une des revendications 1 à 3, qui correspond au nombre de phases, ainsi qu'un bouchon qui est fixé de manière étanche dans une ouverture de la paroi de boîtier et dans lequel les connecteurs de guides de lumière sont montés.

5. Connecteur de guide de lumière selon la revendication 4, caractérisé par le fait que le bouchon sur sa surface extérieure tournée vers l'air ambiant comporte une dépression dans laquelle sont disposées les traversées.
